# FASCICULE DE BREVET EUROPEEN

(11) **EP 0 700 639 B1**
(45) Date de publication et mention de la délivrance du brevet: **01.12.1999**
(21) Numéro de dépôt: 95460033.4
(22) Date de dépôt: 11.09.1995
(51) Int. Cl.: A22C 17/04, B30B 9/12

(54) **Dispositif pour séparer mécaniquement les constituants d'un ensemble composé d'éléments solides et de chair**
Vorrichtung zum mechanischem Trennen eines Gemisches von Fleisch und harter Elemente
Device for the mechanical separation of a combination of meat and solid elements

(30) Priorité: 12.09.1994 FR 9411044
(43) Date de publication de la demande: 13.03.1996
(73) Titulaire: LES INNOVATIONS MECANIQUES ALIMENTAIRES, F-29380 Bannalec (FR)
(72) Inventeur: Marlot, Roger, F-29000 Quimper (FR)
(74) Mandataire: Le Faou, Daniel

(56) Documents cités:
- EP-A- 0 132 084
- EP-A- 0 402 253
- DE-C- 179 388
- DE-C- 339 525
- FR-A- 1 581 327
- FR-A- 2 494 183
- FR-A- 2 542 575
- FR-A- 2 565 851
- GB-A- 1 318 742
- GB-A- 1 501 462
- NL-A- 8 801 230
- US-A- 4 025 001
- DATABASE WPI Section Ch, Week 4385 29 Novembre 1986 Derwent Publications Ltd., London, GB; Class D12, AN 85268289 & SU-A-678 957 (KEMER FOOD) , 15 Avril 1985

## Description

La présente invention concerne un dispositif servant à séparer mécaniquement les constituants d'un ensemble composé d'éléments solides et de chair.

Il s'agit par exemple d'une carcasse d'animal de boucherie ou de volaille comprenant une ossature osseuse à laquelle adhèrent des morceaux de viande.

Après qu'on ait enlevé les principaux morceaux d'une telle carcasse, il reste sur celle-ci une quantité de chair relativement importante, qu'il est économiquement intéressant de récupérer afin de l'utiliser dans certaines applications alimentaires, par exemple comme constituant de chair à saucisses.

Il en est de même pour les poissons et les crustacés dont on veut séparer la chair des arêtes, ainsi que pour les fruits et légumes dont on veut séparer la pulpe des parties solides, par exemple des queues, noyaux ou peaux.

C'est pourquoi, dans la présente description et dans les revendications qui suivent, on entendra par le terme "chair" la partie molle et extrudable, généralement hydratée et comestible, d'un produit alimentaire quelconque, animal ou végétal.

Le terme "élément solide" se rapportera au support dur, généralement inconsommable, de cette chair : ossature d'os ou d'arêtes, carapace pour un animal, queue, noyau, peau, pépins, ou écorce pour un végétal.

Des dispositifs connus pour effectuer ce genre de séparation mécanique comprennent généralement un crible tubulaire cylindrique, en forme de grille, percé d'une multitude de trous, par exemple de fentes, à l'intérieur duquel est montée coaxialement une vis sans fin entraînée en rotation. Le plus souvent, l'ensemble composé d'éléments solides et de la chair à récupérer, par exemple une carcasse d'animal, est concassée ou broyée avant l'opération. La vis déplace le mélange de chair et de fragments solides concassés ou broyés, d'amont vers l'aval à l'intérieur de la grille, en exerçant sur le produit une pression qui provoque le refoulement radial, de l'intérieur vers l'extérieur du crible, des parties molles, c'est-à-dire de la chair. Les fragments solides, dont les dimensions sont plus grandes que celles de la section des trous du crible, sont évacués sous forme de déchets par un orifice de sortie situé à l'extrémité aval du crible, dans le prolongement de la vis sans fin.

Des dispositifs de ce genre sont décrits par exemple dans les documents GB-A-1 318 742, US-A-4 025 001, EP-B-0 132 084 et FR-B-2 565 851.

Pour que la séparation se fasse de manière efficace, c'est-à-dire que la quasi-totalité de la chair soit effectivement refoulée à travers les trous du crible, il est nécessaire que le dispositif soit conçu pour développer une pression élevée au sein du produit.

Pour cela, certains dispositifs utilisent une pompe - par exemple à palettes - qui porte le mélange à filtrer à une pression élevée.

Malheureusement, si un tel agencement est bénéfique sur le plan du rendement, il provoque une forte déstructuration du produit. La chair récupérée a la consistance d'une bouillie, dont la texture est incompatible avec certaines utilisations. Une pression excessive provoque également un échauffement du produit, qui est indésirable sur le plan de l'hygiène car il favorise le développement de certains germes. Enfin, en raison de la pression très élevée, il arrive que certains fragments solides traversent le crible et se trouvent par conséquent présents dans la chair extraite.

C'est pourquoi, certains dispositifs connus sont dépourvus de pompe, et la pression exercée sur le mélange au cours du traitement est exclusivement développée par la ou les vis d'amenée et de refoulement du mélange dans le crible.

Si un tel agencement permet de limiter les inconvénients précités, il n'est pas très efficace. Une partie relativement importante de la chair n'est pas refoulée à travers le crible, et se retrouve présente dans les déchets sortant du dispositif, ce qui est naturellement peu satisfaisant sur le plan du rendement et, corrélativement, du prix de revient de l'opération. Il est fréquent, en outre, que de petits fragments solides résultant du broyage préalable, arrivent à traverser le crible.

Enfin, en raison du broyage préalable, la chair récupérée a toujours la consistance d'une bouillie, de valeur marchande faible.

La présente invention a pour objectif de proposer un dispositif permettant, tout en développant une pression modérée sur le produit à traiter, sans par conséquent déstructurer la chair ni provoquer un suréchauffement de celle-ci, de travailler avec un rendement correct.

Cet objectif est atteint, conformément à l'invention, grâce au fait que la paroi du crible est creusée sur sa face interne d'une rainure hélicoïdale dont le sens est contraire de celui du filet de la vis sans fin qui assure le déplacement du mélange d'une extrémité à l'autre du crible.

La présence de cette rainure va s'opposer au refoulement en sens inverse -c'est-à-dire vers l'amont - des matières et empêcher que celles-ci ne tournent en bloc en même temps que la vis. Un cordon de matière molle vient se loger dans la rainure, formant une sorte de joint d'étanchéité qui assure un maintien de pression suffisant au sein du produit pour permettre un refoulement radial de chair à travers les trous du crible, radialement de l'intérieur vers l'extérieur de celui-ci.

Avec un tel dispositif, il est possible de traiter des carcasses - ou autres ensembles - intactes, c'est-à-dire non préalablement concassées ou broyées.

Par ailleurs, selon un certain nombre de caractéristiques additionnelles avantageuses, mais non limitatives de l'invention:
- ladite rainure possède une section droite sensiblement en forme de triangle rectangle, dont un côté est perpendiculaire à l'axe du crible, et dont l'hypoténuse est dirigée vers l'aval, si on considère le sens de déplacement du mélange ;
- ladite rainure hélicoïdale est à double filet;
- le dispositif comporte une chambre d'alimentation tubulaire cylindrique placée en amont du crible, coaxialement à ce dernier, dans laquelle est logée une vis sans fin rotative apte à amener le produit à traiter d'une trémie d'approvisionnement au crible, et la face interne de la paroi de cette chambre est également creusée d'une rainure hélicoïdale dont le sens est contraire de celui du filet de la vis;
- les deux vis sans fin sont deux portions d'une vis unique et les deux rainures sont deux portions d'une même rainure hélicoïdale;
- ladite vis unique possède un noyau légèrement conique, dont le diamètre croît d'amont vers l'aval;
- ladite vis unique se prolonge, côté amont, par une portion de vis disposée au fond de la trémie, et dont le filet a un pas qui décroît d'amont vers l'aval;
- le dispositif comporte un orifice de sortie des déchets solides situé à son extrémité aval, dans le prolongement de ladite vis sans fin;
- le dispositif comprend une enveloppe tubulaire entourant le crible et pourvu d'un manchon de sortie de la chair;
- le crible est constitué d'une série de rondelles plates contiguës dans lesquelles sont formées des rainures constituant lesdits trous, ceux-ci ayant la forme de fentes;
- lesdites rondelles ont une seule de leurs faces pourvue de rainures, deux rondelles contiguës ayant leur face pourvue de rainures en contact avec la face dépourvue de rainures de la rondelle voisine ;
- la vis sans fin est à double filet, les filets étant équidistants angulairement.

D'autres caractéristiques et avantages de l'invention apparaîtront de la description et des dessins annexés qui en représentent, à titre d'exemple non limitatif, un mode de réalisation préféré.
- la figure 1 est une vue en coupe axiale, par un plan vertical longitudinal, d'un dispositif selon l'invention;
- la figure 2 est une vue partielle, en coupe, de la paroi du crible, cette vue étant destinée à montrer la forme de la section de la rainure ;
- la figure 3 est une vue en perspective d'une rondelle qui constitue un élément du crible du dispositif, selon un second mode de réalisation;
- la figure 4 est une vue partielle en coupe longitudinale, selon un plan vertical, de ce crible.

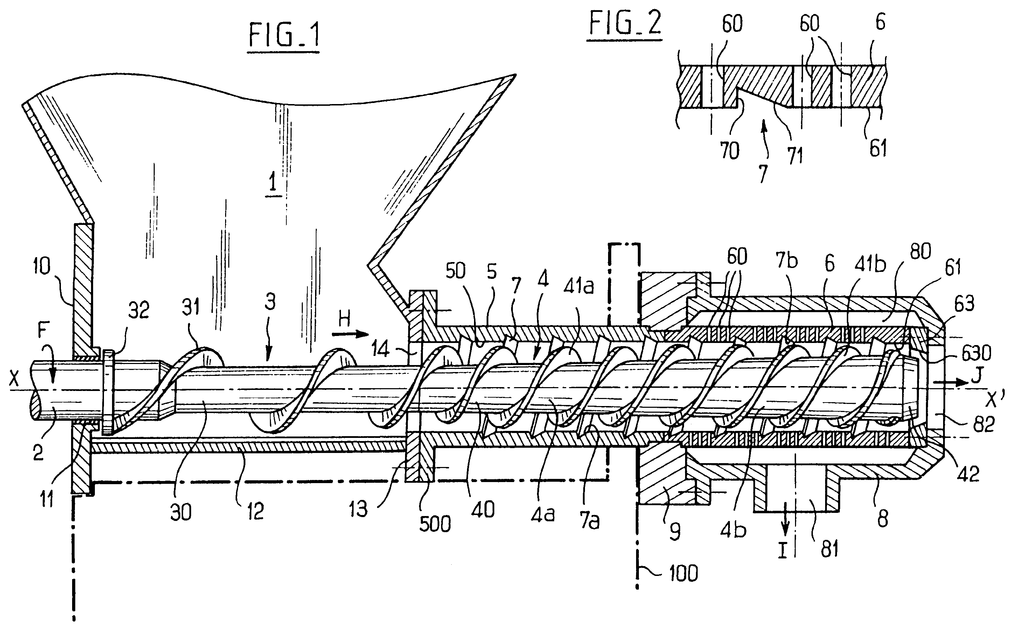

Le dispositif de la figure 1 comprend, de manière bien connue, une trémie 1 servant à recevoir les ensembles constitués d'éléments solides et de chair à traiter, par exemple des carcasses de volaille préalablement dépecées, dont on souhaite séparer le squelette des morceaux et lambeaux de viande qui restent y adhérer, afin de récupérer cette viande.

Le dispositif comprend essentiellement une vis sans fin d'axe horizontal XX' dont la partie amont, référencée 3, se trouve juste au-dessus de la paroi de fond 12, en forme d'auget, de la trémie.

Du côté amont, qui correspond à la partie gauche de la figure 1, la trémie est fermée par une cloison verticale 10 perpendiculaire à l'axe XX' de la vis 3.

La vis 3 se prolonge du côté amont, vers l'extérieur de cette cloison 10, par un arbre 2 qui est entraîné en rotation par des moyens appropriés non représentés, par exemple par un moteur électrique.

Un joint approprié 11 assure l'étanchéité entre l'arbre 2 et l'alésage de la cloison 10 qu'il traverse.

La rotation de l'arbre 2, et corrélativement de la vis 3, est symbolisée par la flèche **F**.

La vis 3 possède, du côté amont de la trémie, un épaulement 32 d'où part un filet hélicoïdal 31 dont le pas est variable, décroissant d'amont vers l'aval.

A l'intérieur de la trémie, le noyau 30 de la vis 3 a un diamètre constant, c'est-à-dire est de forme cylindrique.

Du côté aval, la trémie 1 présente une cloison verticale 13, également perpendiculaire à XX', percée d'un orifice de sortie 14 de forme circulaire, d'axe XX', dont le diamètre est légèrement supérieur à celui du filet 31 de la vis 3.

Le dispositif se prolonge, côté aval, successivement par deux manchons cylindriques 5, 6, coaxiaux, d'axe XX'.

Le manchon 5, ci-après appelé "chambre d'alimentation" possède, côté amont, une embase 500 par laquelle elle est fixée à la cloison 13 de la trémie, par exemple par des vis.

Le manchon 6 est un tube percé d'une multitude de trous 60, par exemple sous forme de perçages cylindriques disposés radialement, c'est-à-dire perpendiculairement à XX'. Il a donc l'allure d'une grille, cylindrique, constituant un crible - ou filtre -.

Le diamètre de sa paroi intérieure est de préférence très légèrement inférieur à celui de la chambre 5.

Un organe de fixation 9, par exemple en forme de collier constitué de deux demi-coquilles, assure la liaison bout-à-bout des manchons 5 et 6.

Le crible 6 est entouré d'une enveloppe tubulaire 8, également d'axe XX', dont la paroi interne à un diamètre sensiblement plus grand que celui de la paroi externe du crible 6, ménageant ainsi entre ces deux éléments une chambre annulaire 80, laquelle est obturée aussi bien côté aval que côté amont. Cette chambre 80 communique vers l'extérieur par un manchon 81. L'axe du manchon 81 est dirigé radialement c'est-à-dire perpendiculairement à XX'.

L'enveloppe 8 possède, côté aval, une cloison transversale verticale percée d'un orifice circulaire 82, d'axe XX'.

Entre la partie d'extrémité aval du crible 6 et cette cloison est insérée une pièce annulaire 63 percée en son centre d'une ouverture à paroi conique 630 qui converge vers l'aval, en direction de l'orifice 82.

La vis 3 se prolonge vers l'aval par une autre vis, référencée 4, et dont le noyau est légèrement tronconique, divergeant vers l'aval. Cette vis est à double filet 41, l'un des filets prolongeant celui de la vis 3 tandis que l'autre se positionne au milieu ce dernier. Ce double filet possède un pas constant.

On a désigné par 4a la portion de la vis 4 qui se trouve à l'intérieur de la chambre d'alimentation 5, et par la référence 4b la portion qui se trouve à l'intérieur du crible 6. Le filet 41 a un diamètre légèrement inférieur aux diamètres internes de la chambre 5 et du crible 6.

De manière particulièrement avantageuse, les deux filets sont équidistants angulairement, c'est-à-dire qu'ils sont distants d'un angle de 180° (diamétralement opposés). Dans l'hypothèse où il serait prévu trois filets, ceux-ci seraient distants angulairement de 120°.

Cette répartition permet d'équilibrer les efforts radiaux qui s'exercent sur la vis et de réaliser l'auto-centrage de cette dernière dans la chambre et le crible.

Ceci a pour intérêt de réduire l'usure des pièces et d'en augmenter de façon importante la durée de vie.

Dans l'exemple représenté, les vis 3 et 4 sont réalisées d'un seul tenant ; il va de soi qu'on ne sortirait pas du cadre de l'invention en utilisant des vis distinctes fixées bout-à-bout. Il en est de même pour les portions 4a et 4b.

L'ensemble qui vient d'être décrit est fixé à un bâti approprié 100, dont le contour est symbolisé par un trait mixte fort.

Selon une caractéristique essentielle de l'invention, les faces intérieures de la paroi de la chambre 5 et du crible 6 sont creusées par une rainure hélicoïdale 7. On a désigné par 7a la partie de la rainure dont est munie la chambre 5 et par la référence 7b la partie de la rainure dont est muni le crible 6.

Ces deux portions de rainure sont dans la continuité l'une de l'autre.

Selon une caractéristique importante, le sens d'hélice de cette rainure 7 est contraire de celui du filet de la vis 4, si bien qu'au cours de sa rotation, le filet de vis vient croiser la rainure.

Avantageusement, cette rainure 7 est également à double filet, comme la vis 4. Elle est creusée dans une plage (également hélicoïdale) de la paroi du crible dépourvue de perçages 60.

L'extrémité libre, côté aval, de la vis 4, est chanfreinée, de manière à présenter une partie tronconique 42, venant en correspondance avec l'ouverture 630.

Des moyens de réglage non représentés, connus en soi, permettent de déplacer en translation selon XX' la vis 3, 4 afin de faire varier le jeu entre cette partie 42 et l'ouverture 630, ce qui permet de modifier l'espace de sortie des déchets et, corrélativement, la pression à l'intérieur du dispositif.

La figure 2 montre un exemple possible du profil de la rainure 7.

Cette rainure possède une section droite (coupée par un plan longitudinal passant par XX') de forme triangulaire rectangle. Le petit côté 70 s'étend radialement, tandis que l'hypoténuse 71 est dirigée vers l'aval.

Cette forme de profil est du type "anti-retour" apte à bloquer le produit vers l'arrière, tout en favorisant son déplacement vers l'avant.

La vis, la trémie, la chambre d'alimentation et le crible sont en acier inoxydable.

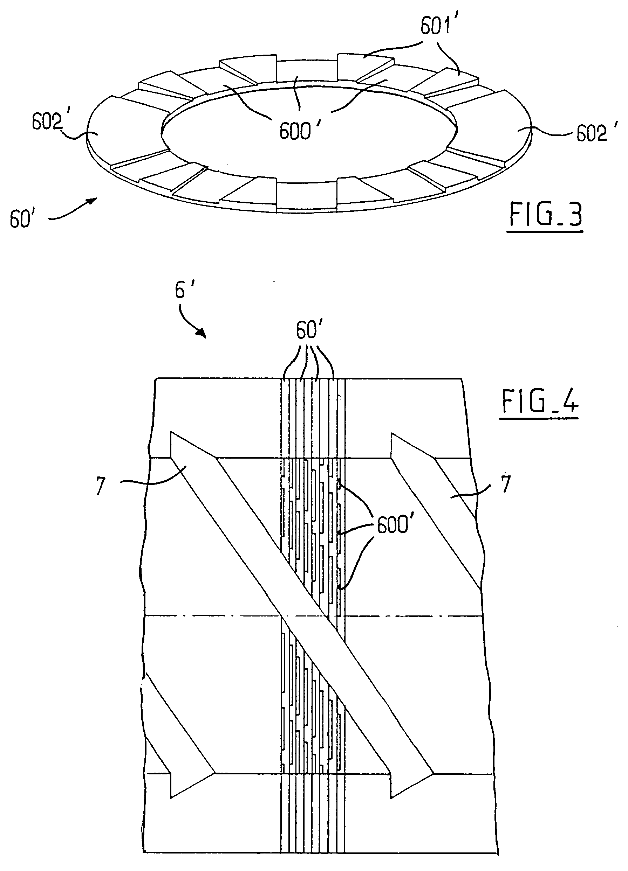

Dans la forme de réalisation des figures 3 et 4, le crible 6' est formé d'une pluralité de rondelles métalliques 60' accolées coaxialement et assemblées par soudage.

Ce sont des rondelles plates, dont les grandes faces sont disposées orthogonalement par rapport à leur axe (axe du crible).

Chaque rondelle 60' comporte, sur une seule de ses faces, une série de rainures - ou encoches - 600'. Ces rainures sont peu profondes et orientées radialement. Elles sont réparties de manière régulière sur la surface de la rondelle.

Dans l'exemple de la figure 3, la rondelle comporte dix rainures séparées deux à deux par des zones de matière qui portent la référence 601'.

Pour constituer le crible, les rondelles identiques 60' sont soudées les unes aux autres de manière à former un tube cylindrique. Comme le montre la figure 4, une rondelle 60' a sa face pourvue de rainures en contact avec la face dépourvue de rainures de la rondelle voisine.

L'ensemble ainsi formé comporte une série de fentes radiales, de section rectangulaire de faible largeur, qui correspondent aux rainures.

On remarquera que les rondelles sont agencées les unes par rapport aux autres de telle manière que les rainures de deux rondelles contiguës soient décalées angulairement. Une structure de ce genre est connue du FR-B-2 542 575.

Le crible comporte donc plusieurs séries de fentes disposées en hélice.

Lorsque les différentes rondelles ont été assemblées, on usine la paroi intérieure du crible, de manière à y former une paire de rainures hélicoïdales en creux (gorges) 7. Celles-ci s'étendent dans des plages 602' diamétralement opposées des rondelles, dépourvues de rainures.

Le dispositif fonctionne comme expliqué ci-après.

Comme déjà dit plus haut, les carcasses de volaille - ou autres produits - à traiter sont déversées (manuellement ou automatiquement, à l'aide d'un convoyeur approprié) dans la trémie, sans broyage préalable.

Le sens de rotation **F** de la vis est choisi, bien entendu, pour que les carcasses déversées dans la trémie 1 soient déplacées par les vis 3, 4 d'amont vers l'aval, comme cela est symbolisé par la flèche **H**. Elles sont entraînées à l'intérieur de la chambre d'alimentation 5, tout en étant progressivement écrasées et mises sous pression, puis refoulées dans le crible.

La pression de travail augmente en raison de la conicité du noyau de la vis, l'espace annulaire disponible pour le produit entre le noyau 40 et la paroi de la chambre 5, puis du crible 6 (ou 6'), s'amenuisant progressivement, de manière régulière.

Le mélange est écrasé, mais non broyé.Il n'y a donc pas éclatement ni fragmentation des os, ou autres parties solides, qui restent intactes. La présence des rainures 7a et 7b maintient le produit sous pression tout en contrariant son refoulement vers l'arrière, à contresens, et sa mise en rotation (en même temps que la vis).

A l'intérieur du crible 6 (ou 6') s'opère une extrusion du produit, la chair étant filtrée et refoulée radialement à travers les trous 60 (ou 600') dans l'espace annulaire 80, à l'intérieur du manchon 8.

Au contraire, les éléments solides, os, arêtes ou carapaces notamment, ne peuvent pas passer par les trous 60 (ou 600'), et poursuivent leur progression pour ressortir en bout de dispositif par l'ouverture 630 puis l'orifice de sortie 82, comme symbolisé par la flèche **J**.

La chair sort du dispositif par la tubulure de sortie 81.

Bien entendu, des dispositifs de réception et d'évacuation appropriés à la fois des déchets et de la chair récupérée sont prévus à chacune de ces deux sorties.

Tout en développant une pression modérée, un tel dispositif permet d'obtenir une récupération de la chair avec un pourcentage correct, sans qu'il en résulte une déstructuration de cette chair, celle-ci étant en outre exempte, ou pratiquement exempte, de tout fragment solide ;de plus, la chair n'a pas la consistance d'une bouillie, mais est constituée de petits morceaux, à cellules non éclatées, ce qui la rend utilisable dans des applications alimentaires et culinaires nobles, à plus-value élevée.

De manière assez surprenante, à la fin de l'opération, l'intérieur du crible est vide et propre, débarrassé pratiquement de tout produit, alors qu'avec les séparateurs traditionnels travaillant sous pression élevée, le crible est bourré de résidus tassés, qui en rendent malaisé le nettoyage.

Comme déjà dit plus haut, un tel dispositif peut concerner la séparation de divers ensembles chair/support solide dans le domaine alimentaire, aussi bien pour traiter des produits d'origine animale que d'origine végétale. Il suffit pour cela à l'homme du métier de choisir les matériaux appropriés et d'adopter les dimensions des organes mécaniques qui composent le dispositif à l'application en question.

A titre indicatif, nous allons donner ci-après les dimensions principales et certaines caractéristiques de fonctionnement d'un dispositif conforme à l'invention conçu pour le traitement de carcasses de dinde.
- Longueur (dimension suivant XX' ) du fond de la trémie 1 : 740 mm.
- Longueur de la chambre d'alimentation 5 : 420 mm.
- Diamètre interne de cette chambre : 170 mm.
- Longueur du crible 6 : 300 mm.
- Diamètre interne du crible : 166 mm.
- Diamètre du noyau de vis 30 : 90 mm.
- Diamètres mini et maxi du noyau de vis tronconique 40 : 90 mm (extrémité amont) et 140 mm (extrémité aval).
- Pas du double filet 41 : 100 mm (200 mm pour chaque filet).
- Pas de la double rainure hélicoïdale 7 : 70 mm (140 mm pour chaque rainure).
- Profondeur de la rainure (correspondant à la longueur du côté 70 de la section triangulaire) : 10 mm.
- Vitesse de rotation de la vis 3-4 : 80 à 90 tr/mm.

Dans certaines applications, pour augmenter le rendement on peut prévoir une pompe en amont du crible, de manière à développer une forte pression sur le produit au cours du traitement. Une telle disposition est bien connue en soi, notamment par le FR-B-2 565 851 déjà cité.

Une carcasse de dinde à traiter a usuellement une masse de l'ordre de 1 kg, composée d'une ossature osseuse de 300 g et de 700 g de viande.

Le dispositif selon l'invention permet de récupérer environ 500 g de cette viande.

Il permet de traiter approximativement 2 tonnes de carcasses par heure.

## Revendications

1. Dispositif pour séparer mécaniquement les constituants d'un ensemble composé d'éléments solides et de chair, qui comprend un crible tubulaire cylindrique (6, 6') percé d'une multitude de trous (60, 600'), à l'intérieur duquel est montée coaxialement une vis sans fin (4b) entraînée en rotation, apte à déplacer l'ensemble d'une extrémité à l'autre du crible (6, 6'), tout en refoulant la chair à travers les trous (60, 600'), vers l'extérieur dit crible, caractérisé par le fait que la paroi du crible (6, 6') est creusée, sur sa face interne (61) d'une rainure hélicoïdale (7b) dont le sens est contraire de celui du filet (41b) de ladite vis sans fin (4b).

2. Dispositif selon la revendication 1, caractérisé par le fait que ladite rainure possède une section droite sensiblement en forme de triangle rectangle, dont un côté (70) est perpendiculaire à l'axe (XX') du crible, et dont l'hypoténuse (71) est dirigée vers l'aval, si on considère le sens (H) de déplacement du mélange.

3. Dispositif selon la revendication 1 ou 2, caractérisé par le fait que ladite rainure hélicoïdale (7b) est à double filet.

4. Dispositif selon l'une des revendications 1 à 3, caractérisé par le fait qu'il comporte une chambre d'alimentation tubulaire cylindrique (5) placée en amont du crible (6, 6'), coaxialement à ce dernier, dans laquelle est logée une vis sans fin rotative (4a) apte à amener le produit à traiter d'une trémie d'approvisionnement (1) au crible (6, 6'), caractérisée par le fait que la face interne (50) de la paroi de la chambre (5) est également creusée d'une rainure hélicoïdale (7a) dont le sens est contraire de celui du filet (41a) de cette vis (4a).

5. Dispositif selon la revendication 4, caractérisé par le fait que les deux vis sans fin (4a, 4b) sont deux portions d'une vis unique (4) et les deux rainures (7a, 7b) deux portions d'une même rainure hélicoïdale (7).

6. Dispositif selon la revendication 5, caractérisé par le fait que ladite vis unique (4) possède un noyau (40) légèrement conique, dont le diamètre croît d'amont vers l'aval.

7. Dispositif selon la revendication 6, caractérisé par le fait que ladite vis unique (4) se prolonge, côté amont, par une portion de vis (3) disposée ait fond de la trémie (1), et dont le filet (31) a un pas qui décroît d'amont vers l'aval.

8. Dispositif selon l'une des revendications 1 à 7, caractérisé par le fait qu'il comporte un orifice (82) de sortie des déchets solides situé à son extrémité aval, dans le prolongement de ladite vis sans fin (4b).

9. Dispositif selon l'une des revendications 1 à 8, caractérisé par le fait qu'il comprend une enveloppe tubulaire (8) entourant le crible (6) et pourvu d'un manchon (81) de sortie de la chair.

10. Dispositif selon l'une des revendications 1 à 9, caractérisé par le fait que le crible (6') est constitué d'une série de rondelles plates (60') contiguës dans lesquelles sont formées des rainures (600') constituant lesdits trous, ceux-ci ayant la forme de fentes.

11. Dispositif selon la revendication 10, caractérisé par le fait que lesdites rondelles (60') ont une seule de leurs faces pourvue de rainures (600'), deux rondelles contiguës ayant leur face pourvue de rainures (600') en contact avec la face dépourvue de rainures (600') de la rondelle voisine.

12. Dispositif selon l'une des revendications 1 à 11, caractérisé par le fait que la vis sans fin (4b) est à double filet, les filets étant équidistants angulairement.

## Claims

1. A device for mechanically separating the components of a mixture of solid elements and of meat, the device comprising a cylindrical tubular screen (6, 6') that is pierced with a multitude of holes (60, 600'), and that has an endless screw (4b) coaxially mounted therein that is driven in rotation, and that is capable of displacing the mixture from one end of the screen (6, 6') to the other, while pushing the meat out of the screen through the holes (60, 600'), the device being characterized by the fact that the wall of the screen (6, 6') is hollowed-out on its inside face (61) by a helical groove (7b), the groove being oppositely handed to the thread (41b) of said endless screw (4b).

2. A device according to claim 1, characterized by the fact that said groove has a cross-section that is substantially in the shape of a right-angled triangle, having one side (70) that is perpendicular to the axis (XX') of the screen, and having a hypotenuse (71) that is directed downstream in the displacement direction (H) of the mixture.

3. A device according to claim 1 or 2, characterized by the fact that said helical groove (7b) has a double thread.

4. A device according to any one of claims 1 to 3, characterized by the fact that it includes a cylindrical tubular feed chamber (5) that is placed upstream from the screen (6, 6') and in line therewith, and in which a rotary endless screw (4a) is housed that is suitable for conveying the substance to be processed from a feed hopper (1) to the screen (6, 6'), the device being characterized by the fact that the inside face (50) of the wall of the chamber (5) is also hollowed-out by a helical groove (7a), the groove being oppositely handed to the thread (41a) of said screw (4a).

5. A device according to claim 4, characterized by the fact that the two endless screws (4a, 4b) are two portions of a single screw (4) and the two grooves (7a, 7b) are two portions of the same helical groove (7).

6. A device according to claim 5, characterized by the fact that said single screw (4) has a slightly conical core (40) that increases in diameter from its upstream end towards its downstream end.

7. A device according to claim 6, characterized by the fact that said single screw (4) is extended at the upstream end by a screw portion (3) disposed at the bottom of the hopper (1) and having a thread (31) that decreases in pitch from its upstream end towards its downstream end.

8. A device according to any one of claims 1 to 7, characterized by the fact that it includes a solid-waste outlet orifice (82) situated at its downstream end, in line with said endless screw (4b).

9. A device according to any one of claims 1 to 8, characterized by the fact that it includes a tubular casing (8) surrounding the screen (6) and provided with a meat outlet sleeve (81).

10. A device according to any one of claims 1 to 9, characterized by the fact that the screen (6') is constituted by a series of adjacent flat washers (60') in which grooves (600') are formed constituting said holes, said holes being slot-shaped.

11. A device according to claim 10, characterized by the fact that one of the faces of each of said washers (60') is provided with grooves (600'), two adjacent washers being positioned so that each face provided with grooves (600') is in contact with that face of an adjacent washer that is not provided with grooves (600').

12. A device according to any one of claims 1 to 11, characterized by the fact that the endless screw (4b) is double threaded, the threads being anglularly equidistant.

## Patentansprüche

1. Vorrichtung zum mechanischen Trennen der Bestandteile eines Gemisches aus harten Elementen und Fleisch, die ein grobes zylindrisches rohrförmiges Sieb (6, 6') mit einer Vielzahl von Löchern (60, 600') aufweist, in das koaxial eine drehbar angetriebene Endlosschraube (4b) eingesetzt ist, welche das Gemisch zwischen den Enden des Siebes (6, 6') bewegen kann und gleichzeitig das Fleisch durch die Löcher (60, 600') an die Außenseite des Siebes befördert,
**dadurch gekennzeichnet, daß**
die Wand des Siebes (6, 6') an ihrer Innenseite (61) mit einer schraubenförmigen Nut (7b) versehen ist, deren Richtung entgegen dem Schraubengang (41b) der Endlosschraube (4b) verläuft.

2. Vorrichtung nach Anspruch 1,
**dadurch gekennzeichnet, daß**
diese Nut einen rechteckigen Querschnitt weitgehend in Form eines rechteckigen Dreiecks besitzt, von dem eine Seite (70) rechtwinklig zur Achse (XX') des Siebes liegt und dessen Hypothenuse (71) nach unten gerichtet ist, wenn man die Richtung (H) der Bewegung des Gemisches in Betracht zieht.

3. Vorrichtung nach einem der Ansprüche 1 oder 2,
**dadurch gekennzeichnet, daß**
die schraubenförmige Nut (7b) einen doppelten Schraubengang aufweist.

4. Vorrichtung nach einem der Ansprüche 1 bis 3,
**dadurch gekennzeichnet, daß**
sie eine zylindrische rohrförmige Beschickungskammer (5) aufweist, welche oberhalb des Siebes (6, 6') koaxial zu diesem angeordnet ist, und in die eine rotierende Endlosschraube (4a) eingesetzt ist, mit deren Hilfe das zu behandelnde Produkt von einem Zufuhrtrichter (1) an das Sieb (6, 6') geleitet wird, und daß die Innenseite (50) der Wand der Kammer (5) ebenfalls mit einer schraubenförmigen Nut (7a) ausgestattet ist, die gegenläufig zu dem Schraubengang (41a) dieser Schraube (4a) angeordnet ist.

5. Vorrichtung nach Anspruch 4,
**dadurch gekennzeichnet, daß**
die beiden Endlosschrauben (4a, 4b) aus zwei Teilen einer einzigen Schraube (4) bestehen und daß die beiden Nuten (7a, 7b) aus zwei Teilen einer einzigen schraubenförmigen Nut (7) bestehen.

6. Vorrichtung nach Anspruch 5,
**dadurch gekennzeichnet, daß**
diese einzige Schraube (4) einen leicht konischen Kern besitzt, dessen Durchmesser von oben nach unten ansteigt.

7. Vorrichtung nach Anspruch 6,
**dadurch gekennzeichnet, daß**
diese einzige Schraube (4) durch einen Schraubenteil (3) verlängert wird, welcher am Boden des Trichters (1) angeordnet ist und dessen Schraubengang eine Steigung hat, welche von oben nach unten abnimmt.

8. Vorrichtung nach einem der Ansprüche 1 bis 7,
**dadurch gekennzeichnet, daß**
sie einen Auslaß (82) für feste Abfälle aufweist, welcher an ihrer Unterseite in der Verlängerung der Endlosschraube (4b) angeordnet ist.

9. Vorrichtung nach einem der Ansprüche 1 bis 8,
**dadurch gekennzeichnet, daß**
sie eine rohrförmige Hülle (8) aufweist, welche das Sieb (6) umgibt und mit einer Manschette (81) für die Abgabe des Fleisches ausgestattet ist.

10. Vorrichtung nach einem der Ansprüche 1 bis 9,
**dadurch gekennzeichnet, daß**
das Sieb (6') aus einer Reihe von benachbarten flachen Scheiben (60') besteht, in die Nuten (600') eingebracht sind, welche diese Löcher bilden und die Form von Schlitzen haben.

11. Vorrichtung nach Anspruch 10,
**dadurch gekennzeichnet, daß**
nur eine Fläche der Scheiben (60') mit Nuten (600') versehen ist, während die Fläche von zwei benachbarten Scheiben mit Nuten (600') ausgestattet ist, welche mit der Fläche der benachbarten Scheibe in Berührung stehen, die keine Nuten (600') aufweist.

12. Vorrichtung nach einem der Ansprüche 1 bis 11,
**dadurch gekennzeichnet, daß**
die Endlosschraube (4b) einen doppelten Schraubengang aufweist, der im gleichen Winkelabstand angeordnet ist.
